# DEMANDE DE BREVET EUROPEEN

(11) **EP 1 216 964 A2**
(43) Date de publication de la demande: **26.06.2002**
(21) Numéro de dépôt: 01130070.4
(22) Date de dépôt: 18.12.2001
(51) Int. Cl.: C02F 5/10

(54) **Procédé et filtre de traitement de l'eau**

(30) Priorité: 21.12.2000 FR 0017072
(71) Demandeur: SEB S.A., 69130 Ecully (FR)
(72) Inventeur: Ceysson, Olivier, 14880 Hermanville sur Mer (FR); Cauret, Laurent, 72380 Montbizot (FR)
(74) Mandataire: Kiehl, Hubert

(57) **Abrégé**

L'invention concerne un procédé et un filtre de traitement de l'eau pour éviter la formation de tartre dans les systèmes consommateurs d'eau et notamment, mais non exclusivement, dans les appareils électroménagers.

Suivant l'invention, le procédé consiste à mettre en contact l'eau avec de l'acide alginique insoluble. Ce procédé peut être facilement mis en oeuvre avec un filtre contenant de l'acide alginique sous forme de poudre, éventuellement mélangée avec d'autres éléments ayant une action hydraulique ou chimique.

## Description

La présente invention se rapporte aux procédés et aux filtres de traitement de l'eau pour éviter la formation de tarte dans les systèmes consommateurs d'eau. Ces systèmes consommateurs d'eau comprennent toutes les installations ou tous les appareils dans lesquels séjourne ou circule de l'eau, et notamment les systèmes comprenant des moyens de chauffage de l'eau. A titre d'exemple non limitatif, on peut citer les installations domestiques ou industrielles de distribution d'eau, les appareils électroménagers en général, qu'il s'agisse d'appareils comme les machines à laver le linge ou la vaisselle, les fers à repasser à vapeur ou d'appareils destinés à fournir de l'eau chaude destinée à la consommation humaine comme les cafetières ou les bouilloires électriques.

Les dépôts de tartre proviennent de l'accumulation de particules de tartre formées dans l'eau. Ces particules de tartre sont constituées de sels et principalement de carbonate de calcium, sulfate de calcium et carbonate de magnésium. Les dépôts de tartre sont la principale cause de vieillissement prématuré des chauffe-eau et notamment ceux des appareils électroménagers. Les dépôts de tartre sur les éléments chauffants diminuent de manière significative leur efficacité et peuvent entraîner leur destruction. De même les canalisations des chauffe-eau peuvent être assez rapidement obstruées dans les régions où l'eau est particulièrement calcaire, ce qui conduit à une mise hors service prématurée des appareils.

Diverses solutions sont utilisées pour remédier au problème de l'entartrage.

Pour les appareils électroménagers de type cafetière ou bouilloire, la solution la plus couramment utilisée consiste à effectuer un détartrage périodique de l'appareil. Cette solution présente de nombreux inconvénients pour l'utilisateur comme le respect du nombre de cycles d'utilisation entre chaque détartrage, le respect de la procédure de détartrage et la manipulation de produits souvent toxiques comme l'acide sulfamique ou l'acide citrique.

Le traitement de l'eau avec des résines échangeuses d'ions est aussi couramment mis en oeuvre dans les installations domestiques ou certains appareils électroménagers comme les fers à repasser et les cafetières. L'efficacité de ces résines est limitée et présente l'inconvénient de décroître très rapidement dans le temps. Elles sont donc le plus souvent utilisées en association avec un dispositif spécifique permettant de les régénérer périodiquement car leur remplacement régulier est onéreux. Mais l'intégration d'un dispositif de régénération dans un appareil électroménager est difficilement envisageable pour des raisons évidentes d'encombrement, de sécurité et de coût.

Une autre solution pour lutter contre la formation de tartre consiste à ajouter dans l'eau un agent soluble, comme les polyphosphates ou certains sels d'alginate solubles. Ce type de solution présente plusieurs inconvénients.
Tout d'abord, le dosage de l'agent complexant ajouté doit être très précis pour assurer une action anti-tarte efficace sans dépasser le seuil au-delà duquel il forme un précipité qui peut rendre l'eau impropre à la consommation humaine. Par exemple pour les polyphosphates la dose doit être de 3 mg/l, et de 0,3 mg/l pour les sels d'alginate solubles. Un dispositif doseur fiable permettant de doser ces faibles quantités n'est pas facilement réalisable et représente un coût important.
Mais l'inconvénient majeur est la présence de l'agent dans l'eau traitée et la libération éventuelle de certains ions, ce qui modifie les qualités organoleptiques et notamment le goût de l'eau. Par exemple, l'emploi d'alginate de sodium libère des ions Na⁺ qui peuvent être contre-indiqués en cas de régime hyposodé. On a aussi noté une perte d'efficacité des agents complexant quand l'eau est portée à haute température.

Enfin, l'emploi de filtre contenant du charbon actif est satisfaisant pour retenir le chlore et les éléments organiques tels que les pesticides, mais ses performances sont faibles contre la formation de tarte.

Le but de l'invention est de remédier à ces inconvénients en proposant un procédé de traitement de l'eau pour éviter la formation de tartre d'une durée d'efficacité importante sans intervention de l'utilisateur, et pouvant être appliqué en outre à de l'eau destinée à la consommation humaine. De plus, ce procédé doit pouvoir facilement être mis en oeuvre dans un appareil électroménager sans entraîner un surcoût important.

Selon l'invention, le procédé de traitement consiste à mettre en contact l'eau avec de l'acide alginique.

Bien que l'acide alginique soit insoluble dans l'eau, on a constaté une diminution importante de la formation de tartre en utilisant de l'eau ainsi traitée. Grâce à ce procédé, on évite la formation de tartre sur les éléments chauffants fonctionnant même à haute température et utilisés notamment dans les appareils du petit et du gros électroménager.

Ce procédé peut facilement être mis en oeuvre dans un appareil électroménager en réalisant un filtre contenant de l'acide alginique, par exemple sous forme de poudre, qui est traversé par l'écoulement d'eau.

D'autres caractéristiques et avantages de l'invention ressortiront de la description qui va suivre, donnée à titre d'exemple non limitatif, en référence aux dessins annexés dans lesquels:
- la figure 1 est une vue en coupe d'une bouilloire électrique équipée d'un filtre suivant l'invention.
- la figure 2 est un graphique représentant la quantité de particules de tartre mesurée après ébullition en fonction du nombre de cycles d'utilisation de différents filtres.

L'invention concerne un procédé de traitement de l'eau pour éviter la formation de tartre dans un système consommateur d'eau qui consiste à mettre en contact l'eau avec de l'acide alginique insoluble.

Par système consommateur d'eau au sens de l'invention, on entend toute installation ou tout appareil dans lequel séjourne ou circule de l'eau, et notamment les systèmes comprenant des moyens de chauffage de l'eau.

L'acide alginique est extrait de certaines algues brunes de la classe des phéophycées. Cet acide est en réalité un copolymère de deux isomères, l'acide β-D-manuronique d'une part 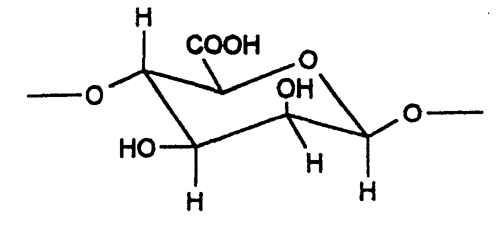 et d'acide α-L-guluronique d'autre part.

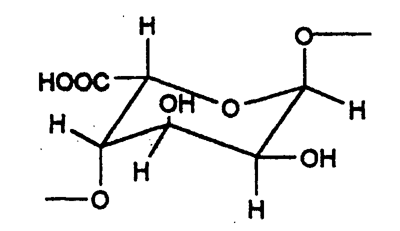

La teneur en acide β-D-manuronique et acide α-L-guluronique varie notamment selon les espèces d'algues et selon le procédé d'extraction de l'acide alginique. Cette teneur variable est caractérisée par le rapport M/G, c'est à dire la proportion d'acide β-D-manuronique par rapport à l'acide α-L-guluronique.

De manière préférentielle, on utilise, pour le procédé selon l'invention, de l'acide alginique à teneur prédominante en acide α-L-guluronique, c'est à dire de l'acide alginique ayant un rapport M/G inférieur à 1. Par exemple, les algues de l'espèce *Lessonia Flavicans* permettent d'obtenir un acide alginique avec un rapport M/G de 0,7. Ce type d'acide a démontré une faible perte d'efficacité après un grand nombre de cycles d'utilisation.

Les essais ont permis d'observer une diminution importante de la formation de particules de tarte dans l'eau ainsi traitée quand elle est portée à ébullition. De même on a constaté, grâce à des tests comparatifs avec de l'eau non traitée, que les dépôts de tartre sur les moyens de chauffage sont fortement réduits dans le temps. D'après l'analyse des premiers résultats, il semble que les cations Ca⁺⁺ et Mg⁺⁺ principaux responsables de la formation de particules de tartre sont retenus par l'acide alginique. Ce procédé permet donc d'obtenir un adoucissement efficace de l'eau sans ajout de substance ou d'ions supplémentaires dans l'eau traitée qui pourraient entraîner la formation de précipités ou la modification des propriétés organoleptiques de l'eau. Ce procédé est donc particulièrement intéressant pour le traitement de l'eau destinée à la consommation humaine, mais son efficacité remarquable ne limite pas son utilisation à ce seul type d'application.

Pour obtenir une bonne mise en contact de l'eau avec l'acide alginique on réalise de préférence un écoulement de l'eau à travers un lit contenant de l'acide alginique.

Le lit peut contenir de l'acide alginique sous différentes formes. Par exemple, il peut être sous forme fibreuse, sous forme de billes ou sous forme de poudre.

Dans l'exemple décrit ci-après l'acide alginique utilisé est sous forme de poudre, mais pour des raisons de fabrication et de coût il peut être préférable d'utiliser de l'acide alginique sous forme fibreuse. Cette forme fibreuse est généralement constituée d'un amas de fibres rectilignes de 0,5 à 3 mm de long.

Alors que l'on pouvait supposer que l'efficacité du filtre serait proportionnelle à la finesse de la poudre, l'expérience a montré que l'acide alginique sous forme d'une poudre de granulométrie supérieure à 200 micromètres permettait d'obtenir de meilleurs résultats. En effet, on a constaté que les poudres de granulométrie inférieure pouvaient occasionner des problèmes de colmatage.

Bien entendu le lit d'acide d'alginique peut contenir d'autres substances chimiques de traitement de l'eau ou des éléments assurant un bon écoulement hydraulique de l'eau à travers le lit afin d'améliorer la mise en contact de l'eau et de l'acide.

Pour mettre en oeuvre le procédé ainsi décrit on peut utiliser un filtre comprenant une poche qui contient de l'acide alginique. L'acide alginique contenu dans la poche est de préférence sous forme d'une poudre telle que décrite précédemment. Mais l'acide alginique contenu dans la poche peut aussi être sous forme fibreuse.

De manière préférentielle, on utilise un acide alginique à teneur prépondérante en acide α-L-guluronique pour obtenir une durée d'efficacité de traitement de l'eau qui soit nettement supérieure.

La poche du filtre peut être réalisée avec différents textiles ou papiers laissant passer l'eau, et dont les pores sont suffisamment petits pour retenir la poudre d'acide alginique. A titre d'exemple, on peut utiliser un papier de fibres cellulosiques ou un feutre de fibres de polypropylène non-tissées. Bien entendu, le filtre peut être réalisé de manière différente sans sortir du cadre de l'invention et se présenter sous forme d'un boîtier en matière plastique contenant l'acide alginique avec deux faces poreuses à travers lesquelles l'eau peut circuler de manière à être en contact avec l'acide alginique.

Afin d'améliorer les paramètres hydrauliques du filtre et notamment de limiter la perte de charge, la poudre d'acide alginique placée dans le filtre est mélangée avec des éléments solides modifiant l'écoulement de l'eau à travers ladite poudre d'acide alginique qui a tendance à se gélifier sous l'action de l'eau. Ces éléments peuvent être constitués par des billes de verre d'un diamètre de l'ordre de 2 mm par exemple ou par des particules de zéolite. Ainsi, en facilitant le cheminement de l'eau à travers le filtre, la mise en contact de l'eau avec l'acide alginique est améliorée par la création de micros canaux dans la poudre d'acide alginique. Les éléments mélangés à l'acide alginique peuvent avoir aussi un effet bénéfique contre le gonflement de l'acide alginique sous l'action de l'eau.

Selon un mode de réalisation particulièrement avantageux, la poudre d'acide alginique insérée dans le filtre est mélangée avec des particules de charbon actif. Ces particules d'une dimension de l'ordre de 2 à 3 millimètres agissent sur l'écoulement de l'eau à travers le filtre comme les éléments solides et permettent en plus de retenir certains composants indésirables de l'eau comme les pesticides ou le chlore.

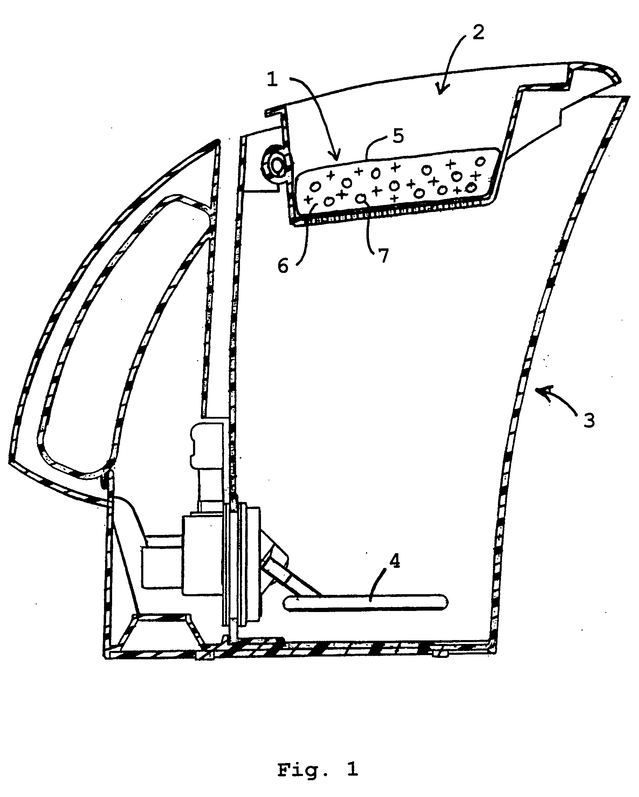

Le procédé ou le filtre selon l'invention est particulièrement intéressant pour les systèmes consommateurs d'eau comprenant des moyens de chauffage de l'eau et dans lesquels le filtre est agencé en amont desdits moyens de chauffage. Comme illustré à la figure 1, le filtre 1 peut être agencé dans l'orifice de remplissage 2 d'une bouilloire électrique 3 comportant une résistance électrique de chauffage 4. Pour cette application le filtre 1 est réalisé sous forme d'une poche souple 5 en fibres cellulosiques à l'intérieure de laquelle est contenu l'acide alginique 6 et éventuellement des éléments 7 modifiant l'écoulement de l'eau. L'eau versée par l'orifice de remplissage 2 traverse par gravité le filtre 1 contenant l'acide alginique, et est ainsi mise en contact avec les particules insolubles d'acide.

Mais bien entendu le filtre peut être modifié en fonction du système consommateur d'eau auquel il est destiné. Par exemple, pour une machine à laver le linge le filtre peut prendre la forme d'une cartouche en matière plastique rigide adaptée à être montée dans la canalisation d'arrivée d'eau sous pression.

La bouilloire précédemment décrite a servi à effectuer des tests avec différents filtres contenant de l'acide alginique sous différentes formes et provenant de différentes algues. Les tests ont consistés à effectuer 40 cycles de remplissage/chauffage avec 1,5 litre d'une eau minérale donnée de qualité constante. Après chauffage l'eau est passée sur un papier filtrant de porosité déterminée, puis la quantité de particules de tartre retenues par le papier filtrant est mesurée. Le tableau ci-dessous regroupe les caractéristiques des différents filtres utilisés et la quantité moyenne de tartre mesurée au cours des 40 cycles en utilisant un indice 100 pour de l'eau non traitée.

| | Rapport M/G | Granulo-métrie | Masse d'acide alginique | Quantité moyenne de tartre mesurée |
|---|---|---|---|---|
| Eau non filtrée | | | | 100 |
| Filtre charbon actif | | | | 69 |
| Filtre 1 | 0,7 | 354 µm | 10 g | 17 |
| Filtre 2 | 0,7 | 150 µm | 10 g | 24 |
| Filtre 3 | 0,7 | 200 µm | 5 g + 15 g de billes de verre | 10 |

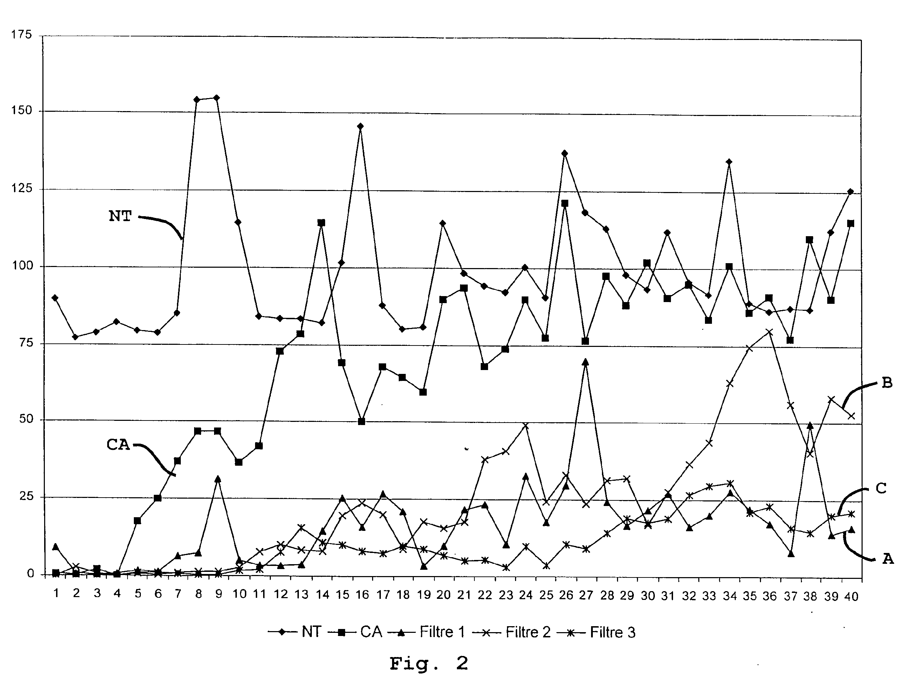

Le graphique de la figure 2 montre, en ordonnée, la quantité de particules de tartre mesurée en utilisant un indice 100 correspondant à la valeur moyenne mesurée avec de l'eau minérale non traitée, et en abscisse les 40 premiers cycles d'utilisation. Les courbes A, B, C représentent les résultats obtenus respectivement avec les filtres 1, 2, 3. A titre de comparaison, la courbe CA correspond au résultat obtenu avec une eau traité par un filtre à charbon actif, et la courbe NT représente la quantité de particules de tartre formée avec une eau non traitée.

Comme on le constate sur le graphique la quantité de particules de tartre formée avec une eau traitée suivant l'invention est très faible, de plus la longévité des filtres contenant de l'acide alginique est bien supérieure à celle du filtre à charbon actif.

L'invention répond au souci d'éviter la formation de tartre dans les systèmes consommateurs d'eau sans ajouter de substances qui pourraient altérer les qualités de l'eau, ce qui est particulièrement intéressant pour les applications dans le domaine de l'eau destinée à la consommation humaine. Mais l'efficacité et la durée d'action de l'acide alginique ne limitent pas son application à ce seul domaine.

## Revendications

1. Procédé de traitement de l'eau pour éviter la formation de tartre dans un système consommateur d'eau
**caractérisé en ce qu'**il consiste à mettre en contact l'eau avec de l'acide alginique insoluble.

2. Procédé de traitement de l'eau selon la revendication 1,
**caractérisé en ce que** la mise en contact de l'eau avec l'acide alginique est réalisée par un écoulement d'eau à travers un lit contenant l'acide alginique.

3. Procédé de traitement de l'eau selon la revendication 1 ou 2,
**caractérisé en ce que** l'acide alginique a une teneur prédominante en acide α-L-guluronique.

4. Procédé de traitement de l'eau selon l'une quelconque des revendications 1 à 3,
**caractérisé en ce que** l'acide alginique est sous forme d'une poudre de granulométrie supérieure à 200 micromètres.

5. Procédé de traitement de l'eau selon l'une quelconque des revendications 1 à 3,
**caractérisé en ce que** l'acide alginique est sous forme fibreuse

6. Filtre de traitement de l'eau pour éviter la formation de tarte dans un système consommateur d'eau,
**caractérisé en ce qu**'il comprend une poche perméable à l'eau contenant de l'acide alginique insoluble.

7. Filtre selon la revendication 6,
**caractérisé en ce que** l'acide alginique a une teneur prédominante en acide α-L-guluronique.

8. Filtre selon la revendication 6 ou 7,
**caractérisé en ce que** l'acide alginique est sous forme d'une poudre de granulométrie supérieure à 200 micromètres.

9. Filtre selon la revendication 6 ou 7,
**caractérisé en ce que** l'acide alginique est sous forme fibreuse.

10. Filtre contenant de l'acide alginique sous forme de poudre ou sous forme fibreuse selon la revendication 6 ou 7,
**caractérisé en ce que** la poche contient également des éléments solides modifiant l'écoulement de l'eau à travers ladite poche.

11. Filtre selon la revendication 10,
**caractérisé en ce que** les éléments solides sont constitués par des particules de charbon actif.

12. Système consommateur d'eau comprenant des moyens de chauffage de l'eau et un filtre selon l'une quelconque des revendications 6 à 11,
**caractérisé en ce que** le filtre est agencé en amont des moyens de chauffage.
